# EUROPEAN PATENT SPECIFICATION

(11) **EP 1 868 446 B1**
(45) Date of publication and mention of the grant of the patent: **10.08.2011**
(21) Application number: 05754838.0
(22) Date of filing: 24.06.2005
(51) Int. Cl.: A23K 1/00, A23K 1/18

(54) **ANIMAL FOOD WITH A CORE AND COATING OF A PALATABILIY ENHANCING SUBSTANCE AND METHOD OF PRODUCTION THEREOF**
TIERFUTTER MIT EINEM KERN UND ÜBERZUG AUS EINER DIE SCHMACKHAFTIGKEIT VERBESSERNDEN SUBSTANZ UND HERSTELLUNGSVERFAHREN DAFÜR
ALIMENT POUR ANIMAUX COMPRENANT UN NOYAU ET UN ENROBAGE D UNE SUBSTANCE AMELIORANT L APPETISSANCE ET SON PROCEDE DE PRODUCTION

(30) Priority: 15.04.2005 BR PI0501477
(43) Date of publication of application: 26.12.2007
(73) Proprietor: Total Alimentos S/A, CEP-37410-000 Brazil (BR)
(72) Inventor: TEIXEIRA DE MIRANDA NETO, Antonio, Três Coracoes-MG, CEP-37410-000 (BR)
(74) Representative: Elzaburu Marquez, Alberto
(86) International application number: PCT/BR2005/000122
(87) International publication number: WO 2006/108249

(56) References cited:
- WO-A1-00/30456
- WO-A1-2004/000036
- FR-A1- 2 807 677

## Description

The present description refers to an application for a patent of invention for a food obtained from a mass composed of various ingredients which, after the cooking stage, is produced by means of an extrusion process in an appropriate equipment, in continuous mode, wherein, by means of a device installed next to the equipment head at the outlet, the mass internally receives the injection by special needles, also under continuous flow, of a flavoring element which may be pasty/creamy or even liquid, in the form of serum, e. g. milk, besides other similar products liable to offer, from the internal part of the food, different humidity, smelling and flavor, in line with the attached set of claims.

After this stage, in production line, the continuous mass is cut into various shapes, and may become a stick, trapezoidal, pillow, rod or other similar food, following to drying, receiving at a later stage a spraying of an external fat layer and finally being revolved to receive a second external flavoring product.

The food, therefore composed by a single mass, thus internally contains the flavoring element inserted through special application devices and also an external flavoring element, which may be combined under appropriate percentages (about 15 to 20% of the total weight of the food).

Therefore, with flavoring products being internally and externally applied to a mass of a single texture, a novel food for cats and dogs is obtained, which keeps the required humidity and oiliness and especially a high palatability grade, from the beginning to the end of mastication, when consumed by dogs and cats.

### STATE OF THE ART

Foods for cats and dogs, popularly called "animal foods", are known, being products currently formed by means of an industrial process of extrusion from a mass obtained by mixing, under appropriate percentages, of the ingredients required to feed dogs and cats.

The extruded mass continuously advances under great compression until being expelled by the head, which molding design produces various configurations for the food, be it in the form of tubes, rectangles or others, while the mass is then cut under different sizes and measurements, then following to the drying stage.

Finally, the already cut and dried food is sent to a stage in which it is sprayed with a fat product, then receiving the application of the favoring element.

As the experts in the art know, said external layer, generally composed by fat and flavoring element, is extremely important to keep a few properties of the food, which will be packed and shown for sale, thus requiring the mass from which it is composed to keep a given humidity and flavor, which is somewhat obtained by adding the fat combined with the flavoring element, applied in such a quantity to fulfill about 4 to 5% of the total weight of the food.

However, this flavoring product, usually applied just to the external part of the food, adhered to the fat material, in fact does not fully penetrate into the mass.

Document WO 2000/030456 A1 describes a method to produce pet food with enhanced palatability wherein a conditioned mixture is cooked under conditions of elevated temperature and pressure in an extruder. The product is segmented into discrete particles, which are conveyed to a forced air drying system. Afterwards, the dried particles are transferred by conveyor to a coating drum and sprayed with animal fat. Finally, the pieces are sprayed or dusted with the palatability enhancer.

Document FR 2 807 677 A1 describes gelatine capsules for the nutrition of animals which consist of a flavoured covering and a flavoured content.

Document WO 2004/000036 A1 mentions that the injection of highly palatable material into cereal mixture as it passes through the extruder is a common technique in the field of commercial pet food manufacture.

### OBJECT OF THE PATENT

The patent at issue proposes the simple insertion to the advancing continuous mass, at the outlet of the extruder, next to the head, of an also continuous wire-shaped flavoring element, injected by needles or other appropriate means, as an internal flavoring agent, thus giving to the product an internal flavor to the sole texture mass.

In a production line, it is then cut into varied shapes and measurements, being the element, in the shape of a rod, trapezoidal, pillow, stick or other, passed to the drying stage, being then sprayed with a layer of fat, if required, and finally receiving the flavoring element, now applied to the external part of the food.

Both the internal and the external dosage of the flavoring elements may be combined, proportionally distributed so to reach about 10 to 20% of the total weight of the food.

Being thus constituted, the food keeps in a single mass full palatability, under full balance, as allowed by the sole texture of the mass.

Furthermore, as another undenlable advantage, the mass under sole texture, while being chopped, keeps the original palatability properties as maintained from the beginning to the end of mastication.

Both the internal and the external flavouring agents may be combined in percentage, as already stated, but are combined in terms of flavors, so that the food may receive e. g. liver flavor internally applied and externally receive fish flavor. The advantage over the new product may be realized for a cat which e. g., while it masticates, feels the sense of homogenization of both flavors with the mass, under appropriate humidity and textures.

Having been superficially explained, the food is now better detailed by means of the attached figures, in which we can see:

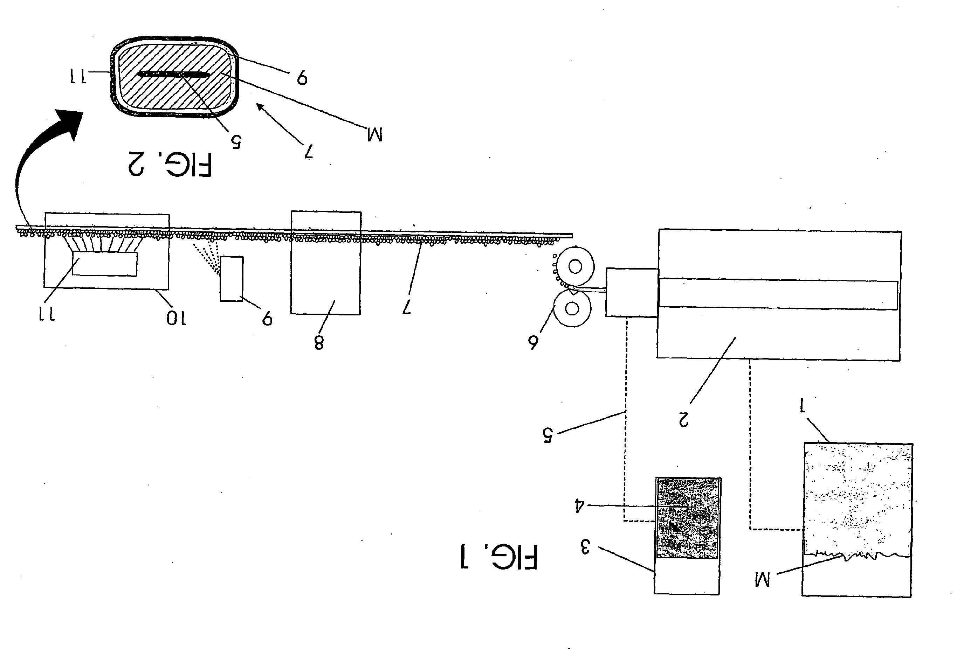

Figure 1 - schematically shows, as an illustration, the process to produce the food which, after being partially cooked, is sent to the extruder, receiving at the outlet an application of the internal flavoring, following for cutting, drying, fat spraying and final application of the external flavoring.
Figure 2 - Shows an enlarged view of the food with its layers as applied to the single mass.

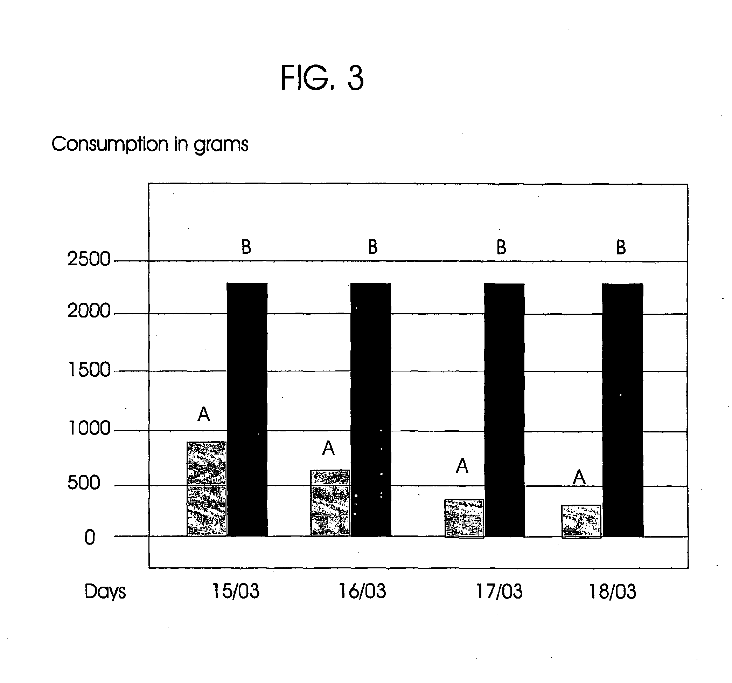

Figure 3 - Shows a graph which will be completed by a table inserted into the text further below. Jointly with the table, the graph shows the permanently high consumption of the food at issue (B) with internal and external flavoring, while the food (A) with external flavoring suffers a reduction in consumption.

According to the attached drawings, the "ANIMAL FOOD WITH INTERNAL AND EXTERNAL ADDITION OF PRODUCT TO ENHANCE PALATABILITY", object of the present application for a patent of invention, constitutes an animal food of mass under single texture, provided with a flavoring element, applied both externally and internally, having the features of attached claim 1.

For its production, the mass (M), after being duly formulated and partially cooked, is initially conventionally sent from a tank (1) to an extruder (2), which head is provided with an applicator device formed by needles linked to a reservoir (3) containing a flavoring element.

The application may be preferably effected by means of said special needles or by other appropriate means, as long as industrially, so to uninterruptedly form, at the outlet of the mass (M), also in continuous flow, an internal layer (5) of a flavoring element.

The mass (M), so far constituted this way, passes through a conventional cutting stage (6), then forming the food (7) already in its final configuration, according to the desired shape, be it a rod, trapezoidal, pillow, stick or other, being obtained as a mass of single texture and therefore provided with an internal layer of a flavoring element (5).

The food (7) then flows to conventional drying stages (8) and the stage of application of a fat layer (9), if required, finally passing through a module (10) to receive the external layer of a flavoring element (11).

The process as disclosed above occurs under known stages, caused by equipment already used in industrial processes, being however reached thanks to the continuous application of the flavoring element (4) internally to the single texture mass (M), a layer (5) which will provide the food (7) with high palatability power, kept from the beginning to the end of the mastication by the animal, in line with attached claim 4.

The application allows to control the volume of dosages, both for the internal layer (5) and the external layer (11), which may be proportionally combined or distributed, around 10 to 20% of the total weight of the food (7), keeping for the whole mastication the required humidity and flavor to satisfy the desired palatability.

Besides the percentage combination, the layers (5) and (11) present different flavors from each other, also combining liver, fish and others, which will be duly homogenized during mastication, since they are impregnated to the single texture mass (M), both from the internal part and the external part, therefore also enhancing palatability.

### EFFECTED TESTS

By means of research, the inventor shows on the table inserted below, completed by the graph of figure 3, the results obtained by the use of the food (7) at issue, formed from a single texture mass, provided with internal (5) and external (11) flavoring layers, under various percentages and flavor combinations, in comparison with a food containing just the conventional external layer of flavoring element.

Therefore, as an illustration shown in the following table, the conventional food is called A (with surface flavoring) and the food at issue (7) (with full flavoring). With that purpose, five animals were chosen, indicated by numbers (7), (9), (71), (138) and (140), to which 600 g of the product A and product B were offered for four days.

The table below shows, for the four days of given food, the total consumption by animal, both for food A (food with surface flavoring) and for food B (food with full flavoring), being the consumption rate indicated by the graph (presented as Figure 3):
A- Product with surface flavoring (external)
B- Product with full flavoring (internal and external).

| | | | | | | | | | | | |
|---|---|---|---|---|---|---|---|---|---|---|---|
| Animal number: | | 7 | | 9 | | 71 | | 138 | | 140 | |
| Offered quantity: 600g | | | | | | | | | | | |
| Consumption of A and B Date | | A | B | A | B | A | B | A | B | A | B |
| | 15/03 | 215 | 600 | 173 | 600 | 110 | 600 | 154 | 600 | 280 | 600 |
| | 16/03 | 99 | 600 | 76 | 600 | 32 | 600 | 195 | 600 | 268 | 600 |
| | 17/03 | 14 | 600 | 39 | 600 | 87 | 600 | 98 | 600 | 110 | 600 |
| | 18/03 | 20 | 600 | 41 | 600 | 53 | 600 | 76 | 600 | 138 | 600 |
| Total consummated Per animal | | 348 | 2400 | 329 | 2400 | 282 | 2400 | 523 | 2400 | 796 | 2400 |

It can be seen that the consumption of food B, object of the present patent application, was kept at its maximum, thanks to the enhanced palatability as obtained by the internal and external application of flavors, while the consumption of food A, just with external flavoring, presented a gradual decrease in consumption, as shown by the results of the table, completed by the indexes presented in the graph of figure 3.

## Claims

1. "ANIMAL FOOD WITH INTERNAL AND EXTERNAL ADDITION OF A PRODUCT TO ENHANCE PALATABILITY", In which the mass (M), after being duly formulated and partially cooked, is sent from a storage tank (1) to an extruder (2), which is provided, next to its head, with a device formed by application needles connected to a reservoir (3) containing a flavoring element (4), being said mass (M) **characterized by** receiving, under continuous flow, at the outlet of the head of the extruder (2), the flavoring element (4), forming an internal layer (5), with the mass (M) passing through a cutting stage (6) to obtain the shape of the food (7), which follows to a drying stage (8) and the stage of application of a fat layer (9), finally passing through a module (10) to externally receive a second layer of flavoring element (11), **characterised in that** the food (7) presents a single texture mass (M) containing internal (5) and external (11) layers of flavoring elements, and **in that** the internal (5) and external (11) layers present different flavours.

2. "ANIMAL FOOD WITH EXTERNAL AND INTERNAL ADDITION OF A PRODUCT TO ENHANCE PALATABILITY" of claim 1, wherein the internal (5) and external (11) layers of flavoring elements are proportionally distributed within about 15% of the full weight of the food (7).

3. "ANIMAL FOOD WITH EXTERNAL AND INTERNAL ADDITION OF A PRODUCT TO ENHANCE PALATABILITY" of claim 2, wherein the internal (5) and external (11) layers of flavoring elements are proportionally distributed, preferably between 10 and 20% of the full weight of the food (7).

4. Method of manufacturing an ANIMAL FOOD WITH INTERNAL AND EXTERNAL ADDITION OF A PRODUCT TO ENHANCE PALATABILITY according to any one of previous claims 1-3, in which the mass (M), after being duly formulated and partially cooked, is sent from a storage tank (1) to an extruder (2), which is provided, next to its head, with a device formed by application needles connected to a reservoir (3) containing a flavoring element (4), said method **characterized by** receiving, under continuous flow, at the outlet of the head of the extruder (2), the flavoring element (4), forming an internal layer (5), with the mass (M) passing through a cutting stage (6) to obtain the shape of the food (7), which follows to a drying stage (8) and the stage of application of a fat layer (9), finally passing through a module (10) to externally receive a second layer of flavoring element (11), in such a manner that the food (7) presents a single texture mass (M) containing internal (5) and external (11) layers of flavoring element, and in that the internal (5) and external (11) layers present different flavours.

## Patentansprüche

1. Tiernahrung mit einem inneren und äußeren Zusatz eines Produkt zum Verbessern der Schmackhaftigkeit, worin die Masse (M), nachdem sie ordnungsgemäß zubereitet und teilweise gekocht wurde, von einem Lagertank (1) zu einem Extruder (2) geschickt wird, der neben seinem Kopf mit einer Vorrichtung versehen ist, die aus Applikationsnadeln gebildet wird, die mit einem Reservoir (3) verbunden sind, das einen Geschmacksbestandteil (4) enthält, worin die Masse (M) **dadurch gekennzeichnet ist, dass** sie unter kontinuierlichem Fluss am Auslass des Kopfs des Extruders (2) den Geschmacksbestandteil (4) erhält, der eine innere Schicht (5) bildet, die Masse (M) durch einen Schneideabschnitt (6) geführt wird, um die Form des Nahrungsmittels (7) zu erhalten, gefolgt von einem Trocknungsabschnitt (8) und einem Abschnitt des Auftragens einer Fettschicht (9), und schließlich durch ein Modul (10) geführt wird, um äußerlich eine zweite Schicht des Geschmacksbestandteils (11) zu erhalten, **dadurch gekennzeichnet, dass** das Nahrungsmittel (7) eine Masse (M) mit einheitlicher Textur darstellt, die innere (5) und äußere (11) Schichten des Geschmacksbestandteils enthält, und **dadurch**, dass die innere (5) und äußere (11) Schicht unterschiedliche Geschmacksrichtungen haben.

2. Tiernahrung mit einem inneren und äußeren Zusatz eines Produkts zum Verbessern der Schmackhaftigkeit gemäß Anspruch 1, worin die inneren (5) und äußeren (11) Schichten der Geschmacksbestandteile proportional innerhalb etwa 15 % des Gesamtgewichts der Nahrung (7) verteilt sind.

3. Tiernahrung mit einem inneren und äußeren Zusatz eines Produkts zum Verbessern der Schmackhaftigkeit gemäß Anspruch 2, worin die inneren (5) und äußeren (11) Schichten der Geschmacksbestandteile proportional vorzugsweise zwischen 10 und 20 % des Gesamtgewichts des Nahrungsmittels (7) verteilt sind.

4. Verfahren zum Herstellen von Tiernahrung mit einem inneren und äußeren Zusatz eines Produkts zum Verbessern der Schmackhaftigkeit gemäß mindestens einem der vorhergehenden Ansprüche 1 bis 3, worin die Masse (M), nachdem sie ordnungsgemäß zubereitet und teilweise gekocht wurde, von einem Lagertank (1) zu einem Extruder (2) geschickt wird, der neben seinem Kopf mit einer Vorrichtung versehen ist, die aus Applikationsnadeln gebildet wird, die mit einem Reservoir (3) verbunden sind, das einen Geschmacksbestandteil (4) enthält, worin das Verfahren **dadurch gekennzeichnet ist, dass** die Masse (M) unter kontinuierlichem Fluss am Auslass des Kopfs des Extruders (2) den Geschmacksbestandteil (4) erhält, der eine innere Schicht (5) bildet, die Masse (M) durch einen Schneideabschnitt (6) geführt wird, um die Form des Nahrungsmittels (7) zu erhalten, gefolgt von einem Trocknungsabschnitt 88) und eines Abschnitts des Auftragens einer Fettschicht (9), und schließlich durch ein Modul (10) geführt wird, um äußerlich eine zweite Schicht des Geschmacksbestandteils (11) zu erhalten, auf eine solche Weise, dass das Nahrungsmittel (7) eine Masse (M) mit einheitlicher Textur darstellt, die innere (5) und äußere (11) Schichten des Geschmacksbestandteils enthält, und **dadurch**, dass die innere (5) und äußere (11) Schicht unterschiedliche Geschmacksrichtungen haben.

## Revendications

1. Aliment pour animaux avec ajout d'un produit à l'extérieur et à l'intérieur pour améliorer l'appétissance, dans lequel la masse (M), après avoir été dûment formulée et partiellement cuite, est envoyée d'un réservoir de stockage (1) à une extrudeuse (2), qui est munie, à côté de sa tête, d'un dispositif formé par des aiguilles d'application reliées à un réservoir (3) contenant un élément d'aromatisation (4), ladite masse (M) étant **caractérisée par** la réception, en flux continu, à la sortie de la tête de l'extrudeuse (2), de l'élément d'aromatisation (4), formant une couche interne (5), avec la masse (M) passant à une étape de découpe (6) pour obtenir la forme de l'aliment (7), et passant ensuite à une étape de séchage (8) et à l'étape d'application d'une couche de matière grasse (9), puis traversant finalement un module (10) pour recevoir à l'extérieur une seconde couche d'élément d'aromatisation (11), **caractérisé en ce que** l'aliment (7) présente une masse de texture unique (M) contenant des couches interne (5) et externe (11) d'éléments d'aromatisation, et **en ce que** les couches interne (5) et externe (11) présentent différents arômes.

2. Aliment pour animaux avec ajout d'un produit à l'extérieur et à l'intérieur pour améliorer l'appétissance selon la revendication 1, dans lequel les couches interne (5) et externe (11) d'éléments d'aromatisation sont distribuées proportionnellement à environ 15 % du poids total de l'aliment (7).

3. Aliment pour animaux avec ajout d'un produit à l'extérieur et à l'intérieur pour améliorer l'appétissance selon la revendication 2, dans lequel les couches interne (5) et externe (11) d'éléments d'aromatisation sont distribuées proportionnellement, de préférence entre 10 et 20 % du poids total de l'aliment (7).

4. Procédé de fabrication d'un aliment pour animaux avec ajout d'un produit à l'extérieur et à l'intérieur pour améliorer l'appétissance selon l'une quelconque des revendications 1 à 3, dans lequel la masse (M), après avoir été dûment formulée et partiellement cuite, est envoyée d'un réservoir de stockage (1) à une extrudeuse (2), qui est munie, à côté de sa tête, d'un dispositif formé par des aiguilles d'application reliées à un réservoir (3) contenant un élément d'aromatisation (4), ledit procédé étant **caractérisé par** la réception, en flux continu, à la sortie de la tête de l'extrudeuse (2), de l'élément d'aromatisation (4), formant une couche interne (5), avec la masse (M) passant à une étape de découpe (6) pour obtenir la forme de l'aliment (7), et passant ensuite à une étape de séchage (8) et à l'étape d'application d'une couche de matière grasse (9), puis traversant finalement un module (10) pour recevoir à l'extérieur une seconde couche d'élément d'aromatisation (11), de telle manière que l'aliment (7) présente une masse de texture unique (M) contenant des couches interne (5) et externe (11) d'éléments d'aromatisation, et que les couches interne (5) et externe (11) présentent différents arômes.
